# EUROPEAN PATENT APPLICATION

(11) **EP 1 768 337 A1**
(43) Date of publication of application: **28.03.2007**
(21) Application number: 05291994.1
(22) Date of filing: 26.09.2005
(51) Int. Cl.: H04L 29/06

(54) **Intelligent border element**

(71) Applicant: Alcatel, 75008 Paris (FR)
(72) Inventor: Shen, Yuzhong, Dipl.-Ing., 70499 Stuttgart (DE)
(74) Representative: LOUIS, PÖHLAU, LOHRENTZ

(57) **Abstract**

The invention concerns a border element (20,21,22) of an IP network (1), the border element (20,21,22) comprising a control unit (30) to exchange information regarding addresses one or more administrative domains (1 to 7) in contact with the border element can resolve, wherein at least one domain (1 to 7) comprises a softswitch (10), a serving call session control function (15) and/or a media server (10), whereby the control unit (30) is further adapted to execute functions of a softswitch, serving call session control function and/or a media server.

## Description

The invention relates to a network service and the optimisation of network resources, in particular to an intelligent border element.

In contrast to existing PSTN telecommunication systems, next generation networks (= NGN) will consist of many new devices, like softswitches, media gateway controllers, media gateways, SIP phones, SIP proxies and so on (PSTN = Public Switched Telephone Network; SIP = Session Initiation Protocol). A border element for a NGN like, e.g., an IMS, is a gateway between an access network and a core network (IMS = IP Multimedia Subsystem; IP = Internet Protocol). The border element, also known as border session controller, is usually entrusted with the signalling traffic and media traffic in VoIP networks (VoIP = Voice over IP).

The border element supports the control of realtime interactive communications - voice, video, and multimedia sessions - across IP network borders. Classical functions of a border element are firewall/NAT (application aware), Service Layer Agreement assurance, QoS, session and media replication and routing for lawful interception (NAT = Network Address Translation; QoS = Quality of Service).

Private border session controllers are used along with firewalls to enable VolP calls to and from a protected enterprise network. Public VolP service providers use border session controllers to allow the use of VolP protocols from private networks with internet connections using NAT.

NAT traversal in a SIP environment is the ability for a SIP call to successfully traverse a NAT device at the border between two networks. Traversal of NAT devices is a problem that SIP, and other VolP protocols, must overcome if they are to be deployed in a public network. NAT devices create separate address ranges for clients sitting behind them, i.e., the addresses that SIP call set-up messages contain cannot be resolved in the public network.

Border Session Controllers have the potential to enable the same ubiquity, quality and security for VoIP that the PSTN offers today, only in the more flexible, efficient and economical manner that IP makes possible.

Initiating an emergency call in most countries implies dialling a unique telephone number independent of the current area where the caller is located such as 1-1-2 in most European countries or 9-1-1 in the USA. The telephone provider establishes an automatic routing of an emergency call to the appropriate local assistance entity such as the nearest police department. Today, most VoIP services have limited emergency call capability, creating a service gap. Moreover, if the call session controller of the IP core is out of order, e.g., because of an earthquake or an explosion, emergency calls cannot be set off.

It is the object of the present invention to provide an improved border element.

The object of the present invention is achieved by a border element of an IP network, the border element comprising a control unit to exchange information regarding addresses one or more administrative domains in contact with the border element can resolve, wherein at least one domain comprises a softswitch or serving call session control function and/or a media server, whereby the control unit is further adapted to execute functions of a softswitch or S-CSCF and/or a media server (S-CSCF = Serving Call Session Control Function).

The basic idea of the invention is to retract a great deal of IP call control from a centralised IP network call control entity and assign these control functions to a decentralised border element, thus adding local call control to the border element. The invention provides a border element which enables an enhanced network performance, network capacity, and network availability.

Therefore, an intelligent border element according to the invention comprises the tasks of a classical border element as mentioned above plus the additional new tasks of call control.

A very important advantage of the invention with respect to the network performance is the high availability, even in cases when a central call control entity would be unaccessible because of broken lines or entity failure. In such a case, it is still possible to send and receive emergency calls.

With the new functionality according to the invention, the intelligent border element has the capability of a local exchange without subscriber information. The intelligent border element does a caching of user registration information to softswitch or S-CSCF. That information can be used for performing local call control without softswitch or S-CSCF, when the link is broken down or if the load of softswitch or S-CSCF should be reduced. Therefore, the local call control provides an improved network availability.

A media resource function for simple announcement for call control can optimise the network resource and is necessary for local call control as described above.

The intelligent border element provides values to NGNs such as IMS for seamless connection of different networks, optimisation of network resources, enhanced network capacity, and improved network availability with local call control function.

The intelligent border element can support a large NGN deployment where a distributed network, modular network function, and high performance are required. The intelligent border element provides a solution which allows emergency calls to be handled over VolP networks.

Further advantages are achieved by the embodiments of the invention indicated by the dependent claims.

According to a preferred embodiment of the invention, the control unit of the border element is adapted to handle an emergency call originating in an access network and sent to the IP network. Therefore the processing of an emergency call becomes independent of the availability of the softswitch, the S-CSCF, or the media server of the IP network.

According to a preferred embodiment of the invention, the control unit is adapted to provide proxy call session control functions in an IP multimedia subsystem according to the third generation partnership project. The P-CSCF (= Proxy CSCF) acts as a proxy accepting, internally processing, and forwarding SIP messages. The P-CSCF may also act as an UA (= User Agent), i.e., in the case of irregularities, SIP transactions may be interrupted and rebuilt. The functions of the P-CSCF are, e.g., session control, i.e., forwarding of incoming SIP messages to the I-CSCF (= Interrogating CSCF) or the S-CSCF or the UA, QoS, emergency call support, monitoring and protocolling of calls for charging purposes, verification, compression and decompression of SIP messages.

Preferably, the control unit is adapted to cache user registration data of a user of the IP network. The control unit determines the address of the initiating terminal and triggers the storage of the address in addition with various other data like, e.g., date and time, data specifying the terminal, communication protocol, etc. in a storage unit.

In a preferred embodiment, the control unit is adapted to perform a local call session control. The local exchange function is integrated into the border element. With the help of the user registration information cached by the border element, local calls may be controlled and processed autonomously by the border element, e.g., in the case of losing the connection to the S-CSCF. Therefore, the border element can act as a standalone local exchange, without any remote node.

According to another preferred embodiment of the invention, the control unit is adapted to perform integrated media resource functions like, e.g., playing a call announcement or a tone. If a trigger event for an announcement is encountered, the border element retrieves the announcement corresponding to the trigger event from a data base and initiates the replay of the announcement to the caller causing the trigger event. By integrating media resource functions into the border element, the network resources are optimised.

Telecommunication data are encoded before being sent over a telecommunication line and decoded before reaching a destination endpoint. The used codec (=coding/decoding) may depend on the VoIP technology used in a domain. When sending telecommunication data from one domain to another domain, the codec of the data has to be mediated so that the coding of the data fits with the coding of the destination domain. Preferably, the control unit is adapted to perform that codec mediation. Through the codec mediation, a seamless connection of different networks is provided.

Preferably, the control unit is adapted to set up a call detail record (= CDR) associated with a call performed in the IP network. In other words, the border element is adapted to compile records of successful calls and failed call events for billing and administrative purposes. Thus, it is possible, e.g., to provide RTP streaming based billing (RTP = Real Time Transport Protocol).

A type of transport layer data communication service that allows a host to send data in a continuous stream to another host is called connection oriented communication. In this type of transport it is guaranteed that all data will be delivered to the other end in the same order as sent and without duplication. The most common example of a connection oriented communication protocol is the Transmission Control Protocol (= TCP). According to another preferred embodiment of the invention, the control unit is adapted to exchange information regarding a connection oriented communication service provided through the IP network.

Data networks are examples of connectionless networks in which the data travels in packets. Common examples of a connectionless communication protocol are the Internet Protocol (= IP) and the User Datagram Protocol (= UDP). According to another preferred embodiment, the control unit receives streaming media data, in particular VolP data, that have to be transferred via the IP network.

These as well as further features and advantages of the invention will be better appreciated by reading the following detailed description of presently preferred exemplary embodiments taken in conjunction with accompanying drawings of which:
- Fig. 1: is a block diagram of a telecommunication system with border elements.

- Fig. 2: is a block diagram of a border element according to the invention.

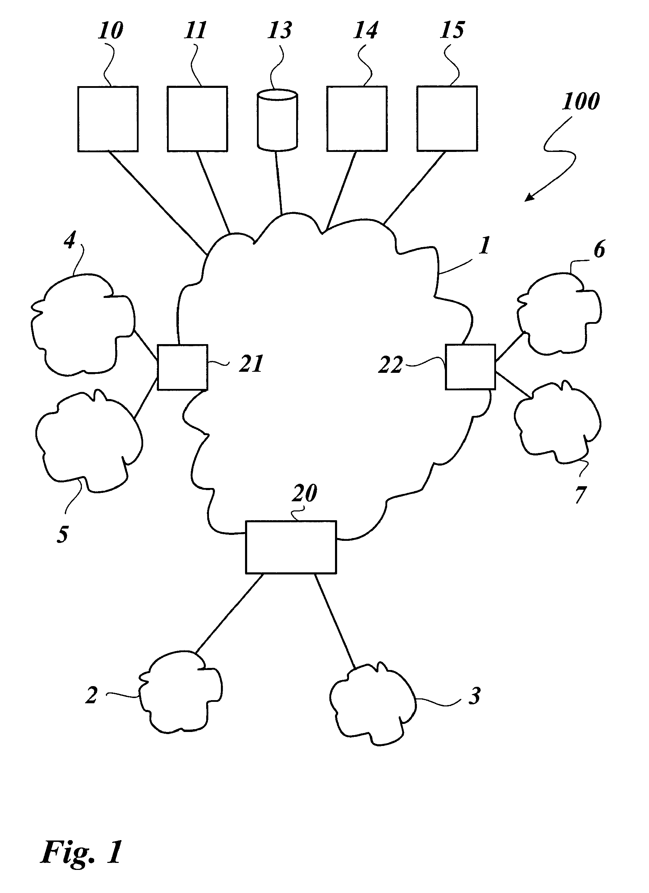

Fig. 1 shows a NGN communication network 100 which is based on a distributed IP network represented by the IP core network 1.

The architecture of this communication network 100 is split into two main sections, the control plane, which is responsible for controlling the communication connection between users of the communication system, and the transport plane, which is responsible for the transportation of the associated media streams. The transport plane can be formed by various different types of physical networks, for example ATM networks or MPLS networks which are linked via a common level 3 IP protocol layer (ATM = Asynchronous Transfer Mode; MPLS = Multiprotocol Label Switching).

The control plane of the communication network 100 contains various media gateways, access gateways and switching nodes responsible for the switching and routing of the media streams through the communication network 100. Such media gateways support stream-like communication as voice, fax or video communication between two or more terminals linked to the communication network 100. Further, such media gateways may provide seamless working of voice and fax connections between public switched telephone networks and IP based networks.

Access networks 2 to 7 are connected to the IP core network 1 by means of border elements 20, 21, 22. The border element 20 connects the access networks 2 and 3 with the IP core network 1.The access networks 2 and 3 comprise an IP PBX network 2 and a broadband (= BB) access network 3 (IP PBX = Internet Protocol Private Branch Exchange). The border element 21 connects the access networks 4 and 5 with the IP core network 1 whereby the access networks 4 and 5 comprise an IP PBX network 4 and a broadband access network 5. The border element 22 connects the access networks 6 and 7 with the IP core network 1 whereby the access networks 6 and 7 comprise an IP PBX network 6 and a BB access network 7.

The telecommunication endpoints (not shown) may be telephones, IP phones, 3G cell phones, IP softphones, company-owned PBXs and IP PBXs, desktop PCs, WiFi Access PCs, etc. connected via lines and modems, such as a DSL cable modem, to the access networks 2 to 7 (WiFi = Wireless Fidelity; DSL = Digital Subscriber Line). The IP telephone terminals are IP phones or computers executing an IP phone client. For example, these terminals are SIP phones or computers executing a SIP client. Further, the IP telephone terminals can be terminals connected via a residential gateway, integrated access device (= IAD) or embedded media termination device (= eMTD) with the communication network 1. Such residential gateways provide a connection between a LAN or wireless LAN environment and an ISDN interface. Such integrated access devices or embedded media termination devices provide a connection between a LAN or wireless LAN environment and a DSL cable modem. Further, the IP phone terminals can be connected via an access node or access gateway of a private network to the communication network 1.

The border elements 20, 21, 22 may be physically separated into signalling and media elements. Border elements are an essential part of building converged networks based on an IMS core. The border elements 20, 21, 22 are situated at the edge of the IP core network 1 to control signalling and media streams as the signalling and media streams enter and exit the IP network 1. The enterprise networks 2, 4 and 6 may be protected against the IP core network 1 by means of a NAT/firewall, possibly integrated into the border elements 20, 21, 22.

The IP network 1 further comprises a softswitch 10, a media server 11, a Home Subscriber Server 13, an I-CSCF 14, and a S-CSCF 15. The softswitch 10 is the call control server associated with IP telephony, supported by the IETF and the ITU-T (H.248.1) (IETF = Internet Engineering Task Force; ITU-T = International Telecommunication Union - Telecommunication Standardisation Sector). It is used for the control of media gateways. It works independently of call signalling with H.323 and the SIP protocol and is used for the establishment of VolP connections. The background of media gateway control is described in detail in RFC 2705.

The softswitch 10 and S-CSCF 15 are constituted by one or several interconnected computers, a software platform running on this hardware platform and several application programs executed by the system platform formed by the hardware and software platform. The functionalities of the softswitch 10 and of the S-CSCF 15 are provided by the execution of these software components on the hardware platform of the softswitch 10 and S-CSCF 15, respectively.

For the registration of network users, the IP addresses of the IP telephone terminals are determined and processed by the call control units 10 to 15, in particular in co-operation with the HSS 13. The terminal data include at least the IP address of the IP telephone terminals. Preferably, these data in addition contain other user registration information. For example, these terminal data include terminal descriptors specifying the type of terminal and the communication protocol which has to be used for communicating with the IP telephone terminal. Further, subscriber data is transmitted to the softswitch 10 and/or the S-CSCF 15.

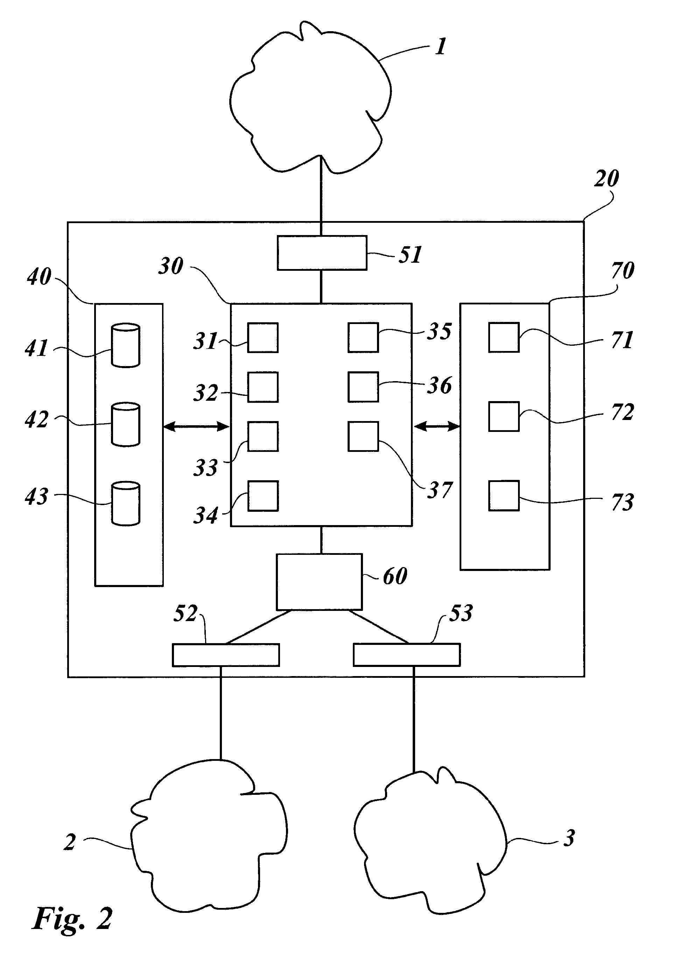

Fig. 2 shows the elements of the border element (= BE) 20. The BE 20 connects the IP network 1 with the access networks 2 and 3. The connection of the networks 1 to 3 with the BE 20 is provided by interface units 51 to 53. The interface 51 connects the BE 20 with the IP network 1. The interfaces 52 and 53 connect the BE 20 with the access networks 2 and 3.

The BE 20 further comprises a control unit 30, a memory unit 40, a call controller 60, and a conventional task unit 70. The control unit 30 comprises an emergency call control function 31, a local call control function 32, a proxy call control function 33, an announcement function 34, a codec mediation function 35, a registration function 36, and a CDR function 37.

The memory unit 40 comprises several storage units 41, 42, 43. The storage unit 41 is a cache memory for caching the registration information locally. The storage unit 42 is a memory for CDRs, and the storage unit 43 is a memory for call announcement recordings.

The conventional task unit 70 comprises a NAT unit 71, a Media Proxy / Replication unit 72, and a QoS unit 73. The functions provided by the units 71 to 73 are conventional task executed by a border element. The conventional functions 71 to 73 are adapted to cooperate with the new functions of the intelligent border element 20.

The call control functions 31 to 37 of the control unit 30 are adapted to intercommunicate. The announcement function 34, the registration function 36, and the call detailed record function 37 are adapted to store data in and to retrieve data from the corresponding storage units 41, 42, 43 of the memory unit 40.

In case an emergency call is initiated by dialling an emergency number in any of the access networks 2 and 3, the emergency call is transmitted via one of the interfaces 52 and 53 to the call controller 60 and forwarded to the appropriate function of the control unit 30, i.e., the emergency call control function 31. The emergency call control function 31 is adapted to determine the destination path, e.g., by referring to a data base kept in the memory unit 40, and forward the emergency call to a destination in any of the access networks 2 to 8. There is no need to contact the softswitch 10 or the S-CSCF 15 in order to retrieve the corresponding switching information. The BE 20 performs the necessary switching in a standalone process.

For example, an earthquake has disrupted the connection between the access network 3 and the IP core network 1. The functions of the central core areas are no longer available. A person wants to call the police by using a telephone connected to the access network 3. The person's emergency call is received by the BE 20 and forwarded to the called police department.

The local call control function 32 and the proxy call control function 33 are adapted to provide local and proxy call session control, usually supplied by dedicated CSCF entities 14, 15 of the IP core network 1 (CSCF = Call Session Control Function).

A CSCF is a functional entity within the IMS as standardised by the 3GPP (3GPP = Third Generation Partnership Project). Thus, CSCF is part of the 3GPP UMTS reference architecture version 5 or later (UMTS = Universal Mobile Telecommunications System). Among the tasks of the CSCFs is the execution of signalling operations for control of SIP sessions, administration of SIP sessions and coordination with other network entities for control of services and resource allocation. Thus, the CSCFs operate as SIP proxies, SIP servers and SIP registrars.

In a IP core network such as network 1, there are three types of CSCFs for controlling the call traffic through the IP network: a P-CSCF, an I-CSCF 14, and an S-CSCF 15. The P-CSCF is the first contact point within the IMS for the subscriber. The subscriber's URL indicates the home service provider, enabling the registration messages to be forwarded to the home network I-CSCF 14. The I-CSCF 14 is the initial authentication contact point within a mobile network for all connections to a subscriber of that network, or a roaming subscriber currently located within the service area of another network. It also acts as a SIP Registrar. The S-CSCF 15 performs the session control services for the subscriber, providing the call intelligence and business logic. When the user is authenticated and authorised, services are delivered by the S-CSCF 15 in the home network.

The intelligent border element 20 is adapted to provide all the functions of the CSCF that are needed for local call control. In particular, the functions of the P-CSCF are implemented into the intelligent border element 20. The intelligent border element 20 is also adapted to execute a pre-processing of long distance calls via the IP core network 1. In paricular, the BE 20 may be adapted to take over functions of the softswitch 10 in an NGN context and/or functions of a S-CSCF 15 in a 3GPP IMS architecture.

Call announcements that are played to the telephone user, e.g., if the user dials an unregistered telephone number, can also be provided by the BE 20. For this end, the announcement function 34 can access the call announcement storage unit 43 to retrieve the call announcement suitable for the current situation. For example, when an unregistered telephone number is dialled, the announcement function 34 is adapted to recognise the mistake, retrieve the appropriate call announcement and trigger the replay of the call announcement to the call originator.

Telephone calls originating from different VoIP networks may be encoded with different codes. Therefore, the forwarding of a call between the two access networks requires a codec mediation. This task is done by the codec mediation function 35. The codec mediation function 35 is adapted to recognise the code the call from the source network is encoded with and also the code required in the destination network. Accordingly, the codec mediation function 35 provides a codec mediation between the two different codes.

The intelligent border element 20 is also adapted to take over functionality of the home location register (= HLR) by caching user registration information. The user registration and logging data mentioned above and usually processed and stored in the call control units 10 to 15 are cached by the border element 20. This task is done by the registration function 36. The registration function 36 is adapted to intercept the signalling traffic carrying the registration information, register a caller and store the registration information in the registration information storage unit 41.

In Internet telephony, a call detail record is a data record that contains information related to a telephone call, such as the origination and destination addresses of the call, the start and end time of the call, the duration of the call, the time of day the call was made and any toll charges that were added through the network or charges for operator services, among other details of the call.

The intelligent border element 20 is also adapted to keep a CDR by recording the CDR information. This task is done by the CDR function 37. The CDR function 37 is adapted to intercept the signalling traffic carrying the call information such as source address, destination address, to add date and time information, and to store these pieces of information in the CDR memory 42 for later access.

## Claims

1. A border element (20, 21, 22) of an IP network (1), the border element (20, 21, 22) comprising a control unit (30) to exchange information regarding addresses one or more administrative domains (1 to 7) in contact with the border element can resolve, wherein at least one domain (1 to 7) comprises a softswitch (10), a serving call session control function (15) and/or a media server (11),
**characterised in**
**that** the control unit (30) is further adapted to execute one or more functions of a softswitch, a serving call session control function and/or a media server.

2. The border element of claim 1,
**characterised in**
**that** the control unit (30) is adapted to handle an emergency call performed in the IP network (1).

3. The border element of claim 1,
**characterised in**
**that** the control unit (30) is adapted to provide functions of the proxy call session control function in an IP multimedia subsystem (1) according to the third generation partnership project.

4. The border element of claim 1,
**characterised in**
**that** the control unit (30) is adapted to cache a user registration of a user of the IP network (1).

5. The border element of claim 1,
**characterised in**
**that** the control unit (30) is adapted to perform a local call session control.

6. The border element of claim 1,
**characterised in**
**that** the control unit (30) is adapted to perform integrated media resource functions for playing a tone and/or a call announcement.

7. The border element of claim 1,
**characterised in**
**that** the control unit (30) is adapted to perform codec mediation.

8. The border element of claim 1,
**characterised in**
**that** the control unit (30) is adapted to set up call detail records associated with a call performed in the IP network (1).

9. The border element of claim 1,
**characterised in**
**that** the control unit (30) is adapted to exchange information regarding a connection oriented communication service provided through the IP network (1).

10. The border element of claim 1,
**characterised in**
**that** the control unit (30) receives stream media data, in particular VoIP data, that have to be transferred via the IP network (1).
